# EUROPEAN PATENT SPECIFICATION

(11) **EP 0 433 385 B1**
(45) Date of publication and mention of the grant of the patent: **28.07.1993**
(21) Application number: 89910842.7
(22) Date of filing: 12.09.1989
(51) Int. Cl.: G01N 21/17

(54) **METHOD AND APPARATUS FOR THE DETECTION OF A GAS USING PHOTOACOUSTIC SPECTROSCOPY**
VERFAHREN UND GERAET ZUM NACHWEIS EINES GASES MITTELS PHOTOAKUSTIK
PROCEDE ET APPAREIL DE DETECTION D'UN GAZ PAR SPECTROSCOPIE PHOTOACOUSTIQUE

(30) Priority: 12.09.1988 DK 5066/88
(43) Date of publication of application: 26.06.1991
(73) Proprietor: FLS Airloq A/S, DK-2500 Valby (DK)
(72) Inventor: HAMMERICH, Mads, DK-3400 Hilleroed (DK); HENNINGSEN, Jes, O., DK-3660 Stenloese (DK); OLAFSSON, Ari, DK-2700 Broenshoej (DK)
(74) Representative: Lomholt, Lars A.
(86) International application number: PCT/DK89/00211
(87) International publication number: WO 90/02935

(56) References cited:
- EP-A- 0 195 685
- WO-A-85/03574
- US-A- 4 457 162
- US-A- 4 740 086
- Appl. Phys. Lett., Vol. 20, No. 3, February 1972 (Connecticut) Frederick G. Gebhardt and David C. Smith: "Kinetic Cooling of a Gas by Absorption of CO2 Laser Radiation"

## Description

The invention relates to a method and apparatus for the detection of a gas using photoacoustic spectroscopy.

All gases have characteristic absorption spectres disclosing the ability of the material to absorb energy as a function of the wave length of a direct influx of energy. This absorption spectre is characteristic for each specific gas and may be considered a sort of fingerprint for the gas. Thus, a specific gas in a gas mixture may be detected by measuring the energy absorption of the gas mixture at selected wave lengths of energy where the gas has a high absorption. A method and an apparatus for such measuring is known from US 4,740,086. Another very appropriate measurement method for measuring such absorption is photoacoustic spectroscopy as mentioned for instance by A.G. Bell in "Philosophical Magazine" 11, 510 (1981). According to this method the gas mixture is influenced by a pulsated energy source, e.g. a laser, cf. E.L. Kerr and J.G. Atwood, "Applied Optics" 7, 915 (1968). The energy absorption of the gas mixture will cause a pressure increase and a pressure decrease, respectively, proportionally to the absorption, the gas being heated during absorption of the energy and being cooled again when releasing the energy absorbed to the surroundings. The absorption may thus be recorded using a pressure transducer wherein the pressure is proportional to the absorption.

However, this measurement method gives rise to problems e.g. in case of interference between the absorption spectres of two gases. In that event it is very difficult to distinguish the absorption of each of the specific gases from each other.

This problem is known in particular from measurements carried out on atmospheric gas mixtures using a C0₂ laser. Herein the large amount of C0₂ in the gas mixture in combination with the particularly intensive absorption ability of C0₂ at the wave lengths of radiation which may be generated with a C0₂ laser to a particularly high degree obstructs the detection of less dominant gases, cf. US 4,457,162.

As disclosed in the article "Selectivity in Optoacoustic Trace Gas Monitoring with Waveguide C0₂ lasers": 11th International Conference on Infrared and Milimeter waves, Tirreria, Pisa, 24-24 October 1986, the selectivity as regards different gases may be increased by letting the laser scan a wave length area around a centre frequency instead of measuring the photoacoustic amplitude of some of the fixed wawe lenghts of the laser. The laser is pulsated in a conventional manner where the radiation emitted within each pulsation has a constant wave length, but the wave length is changed in the course of several pulsations. Combination of this scanning with a reduced pressure in the measurement chamber, thus concentrating the absorption to a narrowed frequency range, has resulted in a significantly increased selectivity. As to measurement in e.g atmospheric environments, however, this method is still far from satisfactory, the C0₂ content of the gas mixture still drowning the photoacoustic signals from less dominant gases.

It is the object of the invention to provide a method of the kind disclosed in the preamble of claim 1 wherein, however, the above inconveniences are eliminated.

This is achieved with the subject matter of the characterizing part of claim 1. Thus, the phenomenon "kinetic cooling" is used to phase shift a partial absorption contribution in the gas mixture thereby permitting detection of the presence of a gas in substantially lower concentrations than it has been possible so far by regarding the phase course as a function of the frequency.

Kinetic cooling is subject to more detailed discussion in the article: "F.G. Gebhardt & D.C. Smith Kinetic Cooling of a Gas by Absorption of C0₂ Laser Radiation" Appl. Phys. Lett. 20, 129, 1972, but in summary it comprises the following: Generally the laser light will excite a part of the molecules which have an absorption frequency close to that of the laser frequency when the light reaches the gas in the measuring cell. These molecules are excited to a higher energy state when they collide with other molecules. This higher energy level is unstable and the energy will be released to the surroundings in the form of heat. This heat generates pressure changes which may be recorded by a pressure transducer due to the pulsation of the laser. For certain combinations of molecules it applies that their high energy levels are close to each other and therefore they are in resonance. Here an excited molecule may lose an energy amount to another molecule which corresponds to twice the amount originally received from the photon. Thereby, the first molecule is in an unstable state, wherein it has an energy deficit as compared to the stable state. The molecule compensates for this through the absorption of energy from the surroundings. Therefore, in this case a subsequent cooling of short duration of the system is recorded when energy is supplied thereto.

By detecting the amplitude of the absorption, too, the method may also be used to carry out improved amplitude measurement by photoacoustic spectroscopy since the phase signal may also be used for the detection in the amplitude signal of such information which is overridden by other information having higher amplitude.

An appropriate special embodiment of the method may be used for the measurement of atmospheric gas mixtures resulting from e.g. combustion processes or from particularly exposed environments where it is desirable to detect polluting gas. In particular it is the absorption into C0₂ which interferes with the measurement and it is therefore desirable to eliminate part of this contribution. C0₂ exhibits distinct kinetic cooling in connection with N₂, and N₂ being present already in atmospheric gas mixtures in high concentrations, the C0₂ contribution may be eliminated to a large extent simply by detecting the phase course of the photoacoustic signal as a function of the frequency.

The apparatus for carrying out the method is characterized in that the frequency of the laser is settable within certain frequency intervals, and in that the electronic circuit comprises phase detection means constructed to record the phase course of the acoustic signal as a function of the frequency of the laser within a frequency interval over which the absorption spectrum of the gas to be measured changes measurably.

In the following the invention will be described with reference to the accompanying drawings, wherein:
Figure 1 is a schematic view of the apparatus for carrying out the method according to the invention,
Figure 2 shows the summation of the signals in vector form,
Figures 3 and 4 show absorption spectres for gas mixtures having trace elements as measured according to the method of the invention,
Figures 5, 6 and 7 show absorption spectres for a trace element which is present in an increasing concentration of interfering gases.

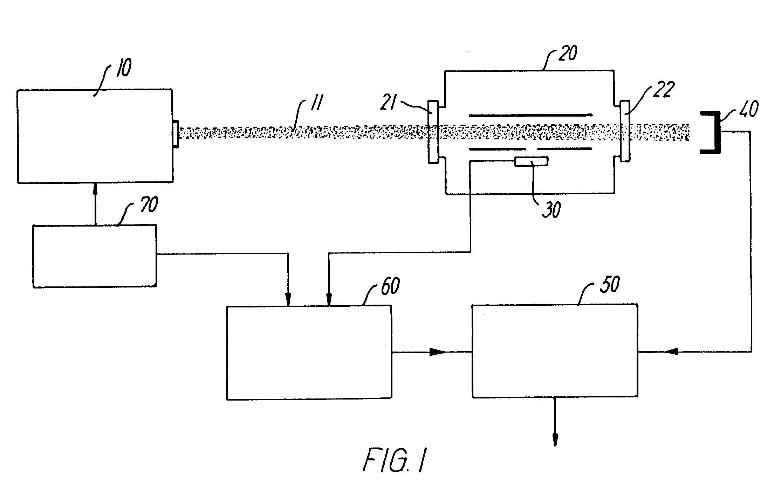

Figure 1 illustrates the optoacoustic gas detection system comprising a laser 10 which, according to a preferred embodiment, is a C0₂ laser due to the high output of such a laser. The laser 10 may be set to several frequencies which will be referred to as center frequencies in the following. Furthermore, the laser 10 may be tuned within a range of 250 MHz to either side of the center frequency. Passage through the frequency spectre in this way is called a window for the spectre. The C0₂ laser operates pulsatedly in the infrared area of the spectre. The frequency is changed gradually from one series of pulsations to the next series of pulsations.

The laser 10 lights up a cell 20 containing a sample of the gas to be scanned for trace elements. According to the preferred embodiment the cell 20 is constructed as an acoustic resonator in which a microphone 30 is mounted. The light enters through a window 21 in the measuring cell 20, where the window 21 absorbs a part of the light. The gas within the cell will absorb another part of the light, which is converted into heat and resulting pressure changes. The laser 10 being pulsated at a repetition frequency of about 700 Hz causes an emission of sound which is recorded by the microphone. The microphone 30 and a light detector 40 transforms the sound and the light, respectively, to electric signals. The microphone 30 receives a signal which is a measure for the amount of absorbed light whereas the detector 40 receives a signal which is considerably stronger, being the original laser pulsation minus the absorbing contribution.

In a lock-in amplifier 60 one part of the signal recorded with the microphone 30 is multiplied with a periodical signal having the same period as the microphone signal. This may e.g. be a sinosoidal signal or a square-wawe signal. Simultaneously the other part is multiplied with a periodic signal which differs from the first periodic signal only in the phase being displaced by 90°. Then the two product signals are integrated over a period and thus two figures are obtained which are said to be the real part and the imaginary part of a complex number. This number expresses the size and the phase of the absorption signal.

A trigger 70 partly controls the repetition frequency of the laser 10, partly syncronizes the periodic signals in the lock-in amplifier 60.

Scanning may advantageously be carried out over several frequencies using the laser 10 thus permitting the generation of an absorption spectre containing both amplitude and phase. The data may then be printed out by a plotter or be displayed on a monitor (not shown) or the like.

Implementation of a catalogue of the absorption spectres of the various gases permits quantitative determination of the gases constituting a given sample. In case of e.g. a sample comprising atmospheric air and some polluting trace elements the fact that, contrary to most other gases, e.g. C0₂ and N₂ jointly exhibit kinetic cooling may be exploited. Thereby it is possible to exploit the fact that the electric signal recorded by the microphone is ideally 180° out of phase for gases exhibiting kinetic cooling as compared to gases which do not. If e.g. atmospheric air constitutes a substantial part of the sample a background signal apart from that of C0₂ and N₂ may be recorded which is coherent from the absorption of the windows 21, 22, and moreover a signal from the H₂0 contained in the sample may be detected which signal has long tails, i.e. the signal interferes far into the spectre and acts as noise far away from the H₂0 absorption frequency. Consequently, when detection of trace elements is carried out on the background of C0₂ and N₂ the background signal does not have a phase shift of 180° but typically only one of about 120°. Therefore, a phase shift is detectable prior to the occurrence of a change of amplitude which is particularly advantageous when detection of trace elements is carried out. Other parameters, e.g. the pressure, may influence the actual phase shifts, but the crucial aspect of the invention is that the absorption contributions are phase shifted to a substantial extent thus causing the resulting phase course to indicate clearly the presence of the gas to be detected.

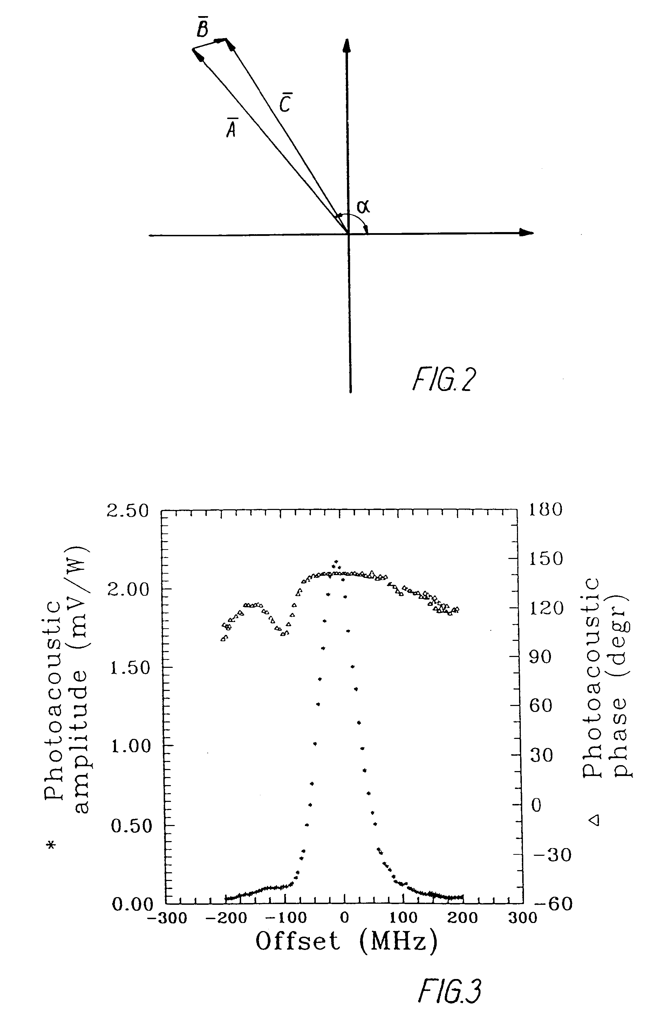

Figure 2 shows a summation of a strong signal A (which may be the result of the presence of C0₂ + N₂) and a weak signal B (e.g. S0₂). No change in the amplitude of the total signal C is detectable whereas a clear change of several degrees in the phase may be detected.

Figure 3 shows a window of the absorption spectre for a gas mixture (C0₂, N₂ and S0₂) shown by the apparatus used in the present invention. It appears that the amplitude curves are similar to a Gaussian curve and there are no signs of the presence of other gases having absorption lines in that part of the spectre. Observation of the phase clearly indicates the presence of a trace element (S0₂) in the gas mixture. Moreover, it appears that the peak occurs at a frequency which is about 110 MHz lower than the centre frequency of the window.

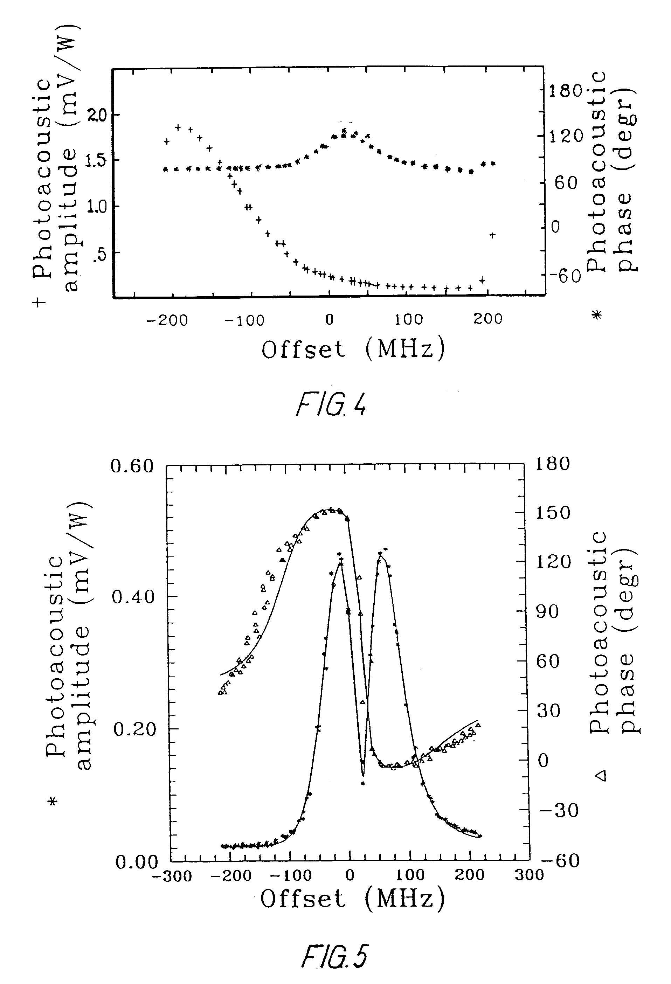

Figure 4 shows that it is also possible to employ the method where the trace element (C0₂) exhibits kinetic cooling in a gas mixture (NH₃ and N₂), wherein the amplitude spectre has a peak (NH₃) for a frequency which is 200 MHz lower than the center frequency of the window and otherwise decreases with increasing frequencies. The phase indicates a clear peak (C0₂) at the center frequency.

The method permits the detection of the frequencies of the absorption lines for determination of the gases. Moreover, the phase shift is shown as a measure of the mutual ratio between the phases. A complex catalogue of the absorption spectre of the gases present permits determination of the quantitative gas content of a gas mixture from a series of windows measured in the absorption spectre.

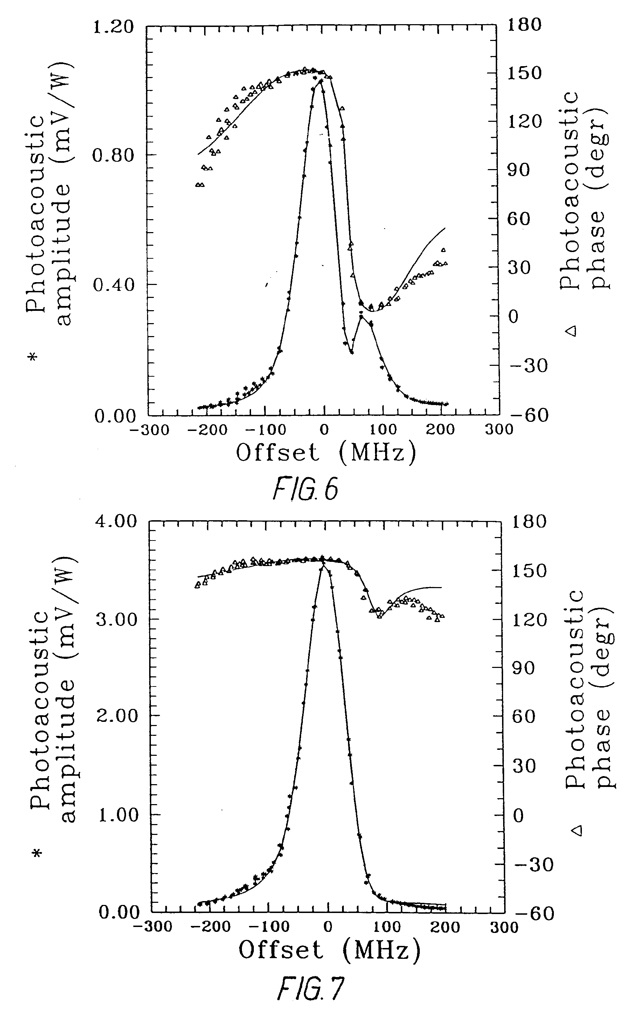

Figures 5, 6, and 7 illustrate how the absorption of S0₂ as a trace element by C0₂ is drowned by C0₂ absorption with the increase of the C0₂ concentration in the gas mixture. In Figure 5 there is about 1% S0₂ in N₂ with 500 ppm S0₂ (ppm = molecules per million). The amplitude clearly indicates the presence of two lines. The phase shift is also strong. In Figure 6 there is 2% C0₂ in N₂ with 500 ppm S0₂. So far there are no problems associated with distinguishing the presence of two elements and the position of the adsorption lines. In Figure 7 there is 5% C0₂ in N₂ with 500 ppm S0₂. Here it is impossible to distinguish the presence of S0₂ from the amplitude. The phase information still indicates the presence of a gas apart from C0₂ and also the position of the absorption line of the second gas.

## Claims

1. A method for the detection of a first gas in a gas mixture using photoacoustic spectroscopy, wherein the gas mixture further comprises a second gas the absorption spectre of which interferes with the absorption spectre of the first gas, wherein the gas mixture is influenced by pulsating laser light having constant pulsation frequency during the measurement and wherein the frequency of the laser light is varied gradually and wherein the measurement comprises at least one detection of the phase of the photoacoustic signal as a function of the frequency, **characterized** in that a photoacoustic measurement is carried out in the presence of a third gas in the gas mixture, said third gas being present in the gas mixture or being added to the mixture immediately before the measurement and exhibiting kinetic cooling in combination with the first or the second gas.

2. A method according to claim 1, **characterized** in that, during the measurement, the gas mixture is provided in a measurement chamber where the pressure is reduced as compared to the atmospheric pressure.

3. A method according to claims 1 or 2, **characterized** in that, during measurement, the gas mixture is provided in a measurement chamber which is constructed as an acoustic resonator and in that the resonance frequency of the measurement chamber is substantially identical with the pulsation frequency of the laser light.

4. A method according to claims 1-3, **characterized** in that the measurement also comprises the detection of the amplitude of the photoacoustic signal as a function of the frequency.

5. A method according to claims 1-4, **characterized** in that the absorption of the gas mixture is measured both as to amplitude and phase at a minimum of one wavelength at which the first gas exhibits absorption, that the third gas is added to the gas mixture which third gas coacts with either the first or the second gas in such a way that they exhibit kinetic cooling, that the absorption of the gas mixture is measured again at the same wavelength(s), and that the minimum of two amplitude and phase measurements are combined to determine the absorption amplitude of the first gas.

6. An apparatus for carrying out the method according to claim 1 comprising in combination a laser, means for pulsation of the laser light, a measuring cell exhibiting acoustic resonance at a frequency which is substantially identical with the repetition frequency of the laser light, a detector for the detection of the radiation passing through the measuring cell, a detector for the detection of an acoustic signal from the measuring cell, and an electronic measurement circuit for processing the signal from the detectors, **characterized** in that the frequency of the laser is settable within certain frequency intervals, and in that the electronic circuit comprises phase detection means constructed to record the phase course of the acoustic signal as a function of the frequency of the laser within a frequency interval over which the absorption spectrum of the gas to be measured changes measurably.

## Patentansprüche

1. Verfahren für die Feststellung eines ersten Gases in einer Gasmischung unter Verwendung der fotoakustischen Spektroskopie wobei die Gasm ischung des weiteren ein zweites Gas umfaßt, dessen Absorptionspektrum das Absorptionsspektrum des ersten Gases stört, wobei die Gasmischung durch pulsierendes Laserlicht mit konstanter Pulsationsfrequenz während der Messung beeinflußt wird und wobei die Frequenz des Laserlichts allmählich verändert wird und wobei die Messung mindestens eine Feststellung der Phase des fotoakustischen Signals als eine Funktion der Frequenz umfaßt, **dadurch gekennzeichnet,** daß eine fotoakustische Messung in Anwesenheit eines dritten Gases in der Gasmischung durchgeführt wird, wobei das dritte Gas in der Gasmischung vorliegt oder der Mischung unmittelbar vor der Messung zugegeben wird und eine kinetische Kühlung in Kombination mit dem ersten oder dem zweiten Gas zeigt.

2. Verfahren nach Anspruch 1, **dadurch gekennzeichnet,** daß während der Messung die Gasmischung in einer Meßkammer vorgesehen wird, wo der Druck im Vergleich zu dem Atmosphärendruck reduziert ist.

3. Verfahren nach Anspruch 1 oder 2, **dadurch gekennzeichnet,** daß während der Messung die Gasmischung in einer Meßkammer vorgesehen wird, die als ein akustischer Resonator ausgebildet ist, und daß die Resonanzfrequenz der Meßkammer im wesentlichen mit der Pulsationsfrequenz des Laserlichts identisch ist.

4. Verfahren nach den Ansprüchen 1-3, **dadurch gekennzeichnet,** daß die Messung auch die Feststellung der Amplitude des fotoakustischen Signals als eine Funktion der Frequenz umfaßt.

5. Verfahren nach den Ansprüchen 1-4, **dadurch gekennzeichnet,** daß die Absorption der Gasmischung sowohl hinsichtlich der Amplitude als auch der Phase bei einem Minimum einer Wellenlänge gemessen wird, bei der das erste Gas eine Absorption zeigt, daß das dritte Gas der Gasmischung zugegeben wird, wobei das dritte Gas mit entweder dem ersten oder dem zweiten Gas in einer solchen Weise zusammenwirkt, daß sie eine kinetische Kühlung zeigen, daß die Abkühlung der Gasmischung wiederum bei derselben (denselben) Wellenlänge(n) gemessen wird und daß das Minimum der beiden Amplituden- und Phasenmessungen zur Bestimmung der Absorptions-Amplitude des ersten Gases kombiniert wird.

6. Vorrichtung zur Durchführung des Verfahrens nach Anspruch 1, welche Vorrichtung kombinativ über einen Laser, Mittel zur Pulsation des 1 Laserlichts, eine Meßzelle, die die akustische Resonanz bei einer Frequenz zeigt, die im wesentlichen mit der Wiederholungsfrequenz des Laserlichts identisch ist, einen Detektor für die Feststellung der durch die Meßzelle hindurchgehenden Strahlung, einen Detektor für die Feststellung eines akustischen Signals von der Meßzelle und einen elektronischen Meßkreis für die Verarbeitung des Signals der Detektoren verfügt, **dadurch gekennzeichnet,** daß die Frequenz des Lasers mit bestimmten Frequenzintervallen einstellbar ist und daß der elektronische Kreis Phasenfeststellungsmittel umfaßt, die zur Aufzeichnung des Phasenverlaufs des akustischen Signals als eine Funktion der Frequenz des Lasers innerhalb eines Frequenzintervalls ausgebildet sind, über dem sich das Absorptionsspektrum des zu messenden Gases meßbar ändert.

## Revendications

1. Procédé de détection d'un premier gaz dans un mélange de gaz par spectroscopie photo-acoustique, dans lequel le mélange de gaz contient aussi un second gaz dont le spectre d'absorption interfère avec le spectre d'absorption du premier gaz, dans lequel le mélange de gaz est influencé par la lumière pulsée d'un laser ayant une fréquence constante de pulsation pendant la mesure, et dans lequel la fréquence de la lumière du laser est modifiée progressivement et la mesure comprend au moins une détection de la phase du signal photo-acoustique en fonction de la fréquence, caractérisé en ce qu'une mesure photo-acoustique est réalisée en présence d'un troisième gaz contenu dans le mélange de gaz, le troisième gaz étant présent dans le mélange de gaz ou étant ajouté au mélange juste avant la mesure et présentant un refroidissement cinétique en combinaison avec le premier ou le second gaz.

2. Procédé selon la revendication 1, caractérisé en ce que, au cours de la mesure, le mélange de gaz est placé dans une chambre de mesure dans laquelle la pression est réduite par rapport à la pression atmosphérique.

3. Procédé selon la revendication 1 ou 2, caractérisé en ce que, au cours de la mesure, le mélange de gaz est placé dans une chambre de mesure qui est construite sous forme d'un résonateur acoustique, et en ce que la fréquence de résonance de la chambre de mesure est pratiquement identique à la fréquence de pulsation de la lumière du laser.

4. Procédé selon les revendications 1 à 3, caractérisé en ce que la mesure comporte aussi la détection de l'amplitude du signal photo-acoustique en fonction de la fréquence.

5. Procédé selon les revendications 1 à 4, caractérisé en ce que l'absorption du mélange de gaz est mesurée à la fois en amplitude et en phase au minimum à une longueur d'onde à laquelle le premier gaz présente une absorption, en ce que le troisième gaz est ajouté au mélange de gaz, et le troisième gaz coopère avec le premier ou le second gaz de manière qu'ils présentent un refroidissement cinétique, en ce que l'absorption du mélange de gaz est mesurée à nouveau à la même longueur d'onde ou aux mêmes longueurs d'onde, et en ce que les minima des deux mesures d'amplitude et de phase sont combinés pour la détermination de l'amplitude d'absorption du premier gaz.

6. Appareil destiné à la mise en oeuvre du procédé selon la revendication 1, comprenant en combinaison un laser, un dispositif destiné à pulser la lumière du laser, une cellule de mesure présentant une résonance acoustique à une fréquence qui est pratiquement identique à la fréquence de répétition de la lumière du laser, un détecteur destiné à détecter le rayonnement traversant la cellule de mesure, un détecteur destiné à détecter un signal acoustique provenant de la cellule de mesure, et un circuit électronique de mesure destiné à traiter le signal des détecteurs, caractérisé en ce que la fréquence du laser est réglable dans certains intervalles de fréquence, et en ce que le circuit électronique comprend un dispositif de détection de phase ayant une construction telle qu'il enregistre l'évolution de la phase du signal acoustique en fonction de la fréquence du laser dans l'intervalle de fréquences dans lequel le spectre d'absorption du gaz à mesurer change de manière mesurable.
